# EUROPÄISCHE PATENTANMELDUNG

(11) **EP 4 265 489 A1**
(43) Veröffentlichungstag der Anmeldung: **25.10.2023**
(21) Anmeldenummer: 23163341.3
(22) Anmeldetag: 22.03.2023
(51) Int. Cl.: B60T 7/16, B62L 5/08, B62L 5/02, B62L 5/18

(54) **BREMSANORDNUNG FÜR FAHRRAD**

(30) Priorität: 20.04.2022 DE 102022109520
(71) Anmelder: H & B Electronic GmbH & Co. KG, 75392 Deckenpfronn (DE)
(72) Erfinder: Morlok, Tobias, 71159 Mötzingen (DE); Schleh, Andreas, 72227 Egenhausen (DE)
(74) Vertreter: Wacker, Jost Oliver

(57) **Zusammenfassung**

Eine Bremsanordnung (22) für ein Fahrrad (2) weist wenigstens einen Bremskörper (24), der zwischen einer Laufstellung und einer Bremsstellung verlagerbar ist, einen Stellmechanismus (30) zur Verlagerung des Bremskörpers (24) zwischen der Laufstellung und der Bremsstellung und eine Steuerungseinrichtung (46) zur Aktivierung des Stellmechanismus (30) in Abhängigkeit eines über eine Empfangseinheit (48) eingehenden Signals (S) auf. Dabei ist vorgesehen, dass der wenigstens eine Bremskörper (24), der Stellmechanismus (30) und die Steuerungseinrichtung (46) innerhalb einer Radnabe (8) aufgenommen sind.

## Beschreibung

Die Erfindung betrifft eine Bremsanordnung für ein Fahrrad, nach dem Oberbegriff des Anspruchs 1 sowie eine Fahrrad-Bremse-Anordnung mit einer solchen Bremsanordnung, wie insbesondere ein Fahrrad für Personen mit eingeschränkten Fahrfähigkeiten, wie Kinder oder Senioren. Die Bremsanordnung ist dabei insbesondere für Personen vorgesehen, die nicht in der Lage sind, die Bremse eines Fahrrades zuverlässig zu bedienen. Die Bremsanordnung weist dabei wenigstens einen Bremskörper auf, der zwischen einer Laufstellung und einer Bremsstellung verlagert werden kann. Zudem weist die Bremsanordnung einen Stellmechanismus zur selbsttätigen Verlagerung des Bremskörpers zwischen der Laufstellung und der Bremsstellung auf und eine Steuerungseinrichtung zur Aktivierung des Stellmechanismus in Abhängigkeit eines über eine Empfangseinheit eingehenden beziehungsweise nicht mehr eingehenden Signals.

Aus DE102018114452A1 ist eine Bremsanordnung für Kinderlaufräder bekannt. Diese weist einen Bremskeil auf, der zwischen einem Sitzrohr beziehungsweise einem Rahmenteil des Kinderlaufrades und der Lauffläche des Hinterrades gehalten ist. Der Bremskeil ist dabei in einer Freigabestellung gehalten, in der er beabstandet zur Lauffläche angeordnet und in Richtung einer Bremsstellung vorgespannt ist. Mittels eines Senders ist dabei eine Steuerungseinrichtung ferngesteuert aktivierbar, die eine vorgespannte Feder freigibt, durch die der Bremskeil in die Bremsstellung verlagert werden kann. Dabei wird der Bremskeil in eine Klemmstellung zwischen dem Sitzrohr und der Lauffläche verlagert und das Fahrrad dadurch abgebremst.

Nachteilig an der bekannten Bremsanordnung ist, dass diese durch die Klemmwirkung des Bremskeils, insbesondere bei einer trockenen Lauffläche des Rades, ein relativ abruptes Abbremsen bewirkt, was zu einem Sturz des Fahrers führen kann. Bei nasser Lauffläche kann dagegen in der Bremsstellung in vielen Fällen keine ausreichende Bremswirkung erzielt werden. Zudem muss die Bremsanordnung an die konkrete Geometrie des betreffenden Fahrrades im Bereich des Hinterrades angepasst sein, weshalb sie in der Regel jeweils nur für ein bestimmtes Fahrradmodell verwendet werden kann. Ferner kann die Bremsanordnung aufgrund ihrer Anordnungsweise am Fahrrad relativ leicht verstellt oder beschädigt werden, wie beispielsweise beim Umkippen des Fahrrades, was wiederum zu einem Funktionsausfall der Bremsanordnung führen kann.

EP 2489562 A1 beschreibt dabei eine Sicherheitsvorrichtung zum ferngesteuerten Abbremsen eines Kinderfahrrades. Dabei sind Bremsmittel vorgesehen, die beispielsweise an einer Nabe oder einer Nabentrommel angebracht sein können.

DE 102006031855 A1 beschreibt eine Brems-Vorrichtung für Fahrräder oder Motorräder, die eine schräg mit einer Rad-Drehachse gekoppelte Exzenter- oder Taumelscheibe aufweist. Das Blockieren der Taumelbewegung der Scheibe bremst hierbei die RadDrehung. In einer Ausführungsform der Vorrichtung ist dabei eine Radnaben-Hülle mit exzentrischer Innenfläche vorgesehen, die in eine Radnabe des Fahrzeugs integriert ist.

Die Aufgabe der Erfindung ist es, bei einer gattungsgemäßen Bremsanordnung die genannten Nachteile zu vermeiden und eine sichere Befestigung am Fahrrad sowie einen sicheren Abbremsvorgang zu ermöglichen.

Diese Aufgabe wird durch eine Bremsanordnung mit den Merkmalen des Anspruchs 1 gelöst. Dabei sind der wenigstens eine Bremskörper, der Stellmechanismus und die Steuerungseinrichtung innerhalb einer Radnabe aufgenommen, die für ein Vorder- oder Hinterrad des betreffenden Fahrrades verwendbar ist. Hierdurch ist die Bremsanordnung mit einer Vielzahl von Fahrrädern kompatibel, wie insbesondere Laufrädern oder Kinderfahrrädern. Dabei ist die Bremsanordnung geschützt und platzsparend in einer Radnabe aufgenommen, so dass Beschädigungen oder ein Verstellen der Bremsanordnung sowie daraus resultierende Fehlfunktionen zumindest weitestgehend verhindert werden können. Zudem ist die Bremsanordnung durch den wenigstens einen geschützt in der Radnabe aufgenommenen Bremskörper, im Wesentlichen unabhängig von der Wetterlage, permanent voll funktionsfähig.

In einer besonders bevorzugten Ausführungsform ist der wenigstens eine Bremskörper dabei am Stellmechanismus gehalten, der gegenüber einer Radachse des Fahrrades festlegbar beziehungsweise an dieser befestigt ist und mittels dem der Bremskörper in der Bremsstellung gegen eine Innenseite einer Bremstrommel gepresst werden kann. Auf diese Weise bildet die Bremsanordnung eine Trommelbremse, durch die ein kontrolliertes Abbremsen des Fahrrades möglich ist und die aufgrund ihrer Bauweise sehr langlebig und betriebssicher ist.

Zudem ist es günstig, wenn die Radnabe ein Nabengehäuse aufweist, das durch zwei zusammensetzbare Halbschaltenteile gebildet ist. Hierdurch kann die Bremsanordnung insgesamt einfacher montiert und gegebenenfalls nachgerüstet werden.

Vorteilhafterweise ist die Bremstrommel zudem durch einen zylindrischen Teil des Nabengehäuses gebildet, wodurch die Bremsanordnung ohne separate Bremstrommel kostengünstig hergestellt und einfach montiert werden kann.

Ferner ist es günstig, wenn das Nabengehäuse zwei Speichenflansche bildet, in die jeweils eine umlaufende Anordnung von Speichenaufnahmen eingelassen ist. Auf diese Weise kann die Bremsanordnung besonders stabil in ein Speichenrad integriert werden.

Alternativ hierzu weist das Nabengehäuse außenseitige Befestigungsmittel zur drehfesten Festlegung an einer zentrischen Nabenaufnahme eines Vorder- oder Hinterrades auf, wie beispielsweise eines Kunststofffelgenrades auf. Hierdurch kann die Bremsanordnung bei entsprechender Dimensionierung auch für einfache Kinderfahrräder verwendet und einfach nachgerüstet werden.

Zudem ist es günstig, wenn das Nabengehäuse wenigstens teilweise aus faserverstärktem Material hergestellt ist. Hierdurch kann das Nabengehäuse und damit auch die Bremsanordnung insgesamt besonders stabil gegenüber mechanischen Beanspruchungen ausgeführt werden.

Vorteilhafterweise weist die Radnabe eine Achsaufnahme für die Radachse auf, die zur Anpassung der Radnabe an unterschiedlich breite Rahmengabeln längenmäßig verändert werden kann, wie beispielsweise durch hülsenförmige Abstandhalter an den Enden der Achsaufnahme. Hierdurch kann die Bremsanordnung beziehungsweise deren Achsaufnahme besonders variabel an unterschiedliche Fahrradrahmengrößen angepasst werden.

Ferner ist es günstig, wenn wenigstens zwei Bremskörper vorgesehen sind, die mittels des Stellmechanismus voneinander weg in die Bremsstellung verlagerbar sind. Durch die in entgegengesetzter radialer Richtung verstellbaren Bremskörper können dabei die Bremskräfte in besonders gleichmäßiger Verteilung an der Bremstrommel erzeugt werden.

Dabei ist es von Vorteil, wenn der Stellmechanismus ein Keilgetriebe bildet, mittels dem die wenigstens zwei Bremskörper in radialer Richtung voneinander weg in die Bremsstellung verlagert werden können. Das Keilgetriebe ermöglicht dabei durch die Spreizwirkung die Erzeugung relativ großer Bremskräfte bei gleichzeitig relativ geringem Bauraum.

Dabei weist der Stellmechanismus vorteilhafterweise einen Elektromotor auf. Hierdurch kann die Bremsanordnung mehrfach zwischen der Laufstellung und der Bremsstellung hin- und herbewegt werden, wobei lediglich ein relativ geringer Bauraum des Stellmechanismus benötigt wird. Zudem ermöglicht die Verwendung eines Elektromotors eine vorbestimmte Festlegung des Bremskraftverlaufs während eines Bremsvorganges, wie insbesondere eine stetige Zunahme der Bremskraft. Hierdurch kann der ferngesteuert eingeleitete Bremsvorgang besonders gleichmäßig und ohne ein frühzeitiges Blockieren des betreffenden Rades durchgeführt werden. Auf diese Weise kann die Sturzgefahr durch einen ferngesteuert eingeleiteten Bremsvorgang erheblich vermindert werden. Vorteilhafterweise ist der Elektromotor dabei koaxial zur Achsaufnahme ausgebildet, um über den Spindeltrieb eine gleichmäßige Verteilung der Bremskräfte an der Bremstrommel erzeugen zu können.

Zudem ist es günstig, wenn der Stellmechanismus über einen Spindeltrieb durch den Elektromotor mit einer Stellkraft beaufschlagt werden kann, um eine präzise und einfache Verlagerung des wenigstens einen Bremskörpers zwischen der Laufstellung und der Bremsstellung zu ermöglichen.

Zudem kann der Elektromotor vorteilhafterweise über einen Akkupack mit elektrischem Strom versorgt werden, wobei der Akkupack ebenfalls innerhalb der Radnabe aufgenommen ist. Auf diese Weise kann auch die für den Elektromotor benötigte Stromversorgung geschützt in der Radnabe aufgenommen werden. In einer besonders bevorzugten Ausführungsform ist der Akkupack dabei durch Rekuperation aufladbar. Hierdurch kann die Bremsanordnung auch ohne zwischenzeitliches Aufladen über eine lange Betriebsdauer hinweg mit Strom versorgt werden. Zum Aufladen des Akkupacks kann dabei entweder die Bremsanordnung selbst mit einer Rekuperationsfunktion versehen sein, wie beispielsweise mittels wenigstens eines Generators, der an einem der Bremskörper gehalten und durch die Bremstrommel antreibbar ist. Alternativ hierzu kann ein separater Generator, wie beispielsweis ein Schüttelgenerator oder ein Fahrraddynamo vorgesehen sein, um eine Bewegungsenergie des Fahrrades zum Wiederaufladen des Akkupacks nutzen zu können.

Ferner wird die oben genannte Aufgabe durch eine Fahrrad-Bremse-Anordnung gelöst, die ein Fahrrad für eingeschränkt fahrfähige Personen, wie beispielsweise Kinder oder Senioren, eine Bremsanordnung in einer der oben beschriebenen Ausführungsformen und einen Sender zur Aussendung des Signals aufweist. Dabei ist die Bremsanordnung in der Radnabe eines Hinterrades aufgenommen und kann in Abhängigkeit des über die Empfangseinheit eingehenden Signals aktiviert werden. Hierdurch kann das Fahrrad auch bei Verwendung durch eine Person, die nicht in der Lage ist, eine Bremse zuverlässig zu bedienen, im Bedarfsfall durch eine beaufsichtigende Person oder elektronisch sicher abgebremst werden. Hierzu wir das benötigte Signal durch Eingabe eines Steuerungsbefehls in den Sender oder durch selbsttätiges Aussenden in Abhängigkeit einer ermittelten Position oder Geschwindigkeit erzeugt.

Dabei kann der Stellmechanismus bei Empfang des Signals in Form eines an der Empfangseinheit eingehenden Aktivierungssignals vom betätigten Sender aktiviert werden. Hierdurch kann ein Fahrrad, wie beispielsweise ein Kinderfahrrad beziehungsweise ein Kinderlaufrad oder ein Seniorenfahrrad von einer beaufsichtigenden Person bei Bedarf durch Eingabe eines Steuerungsbefehls in den Sender abgebremst werden. Als Sender kann dabei beispielsweise ein spezieller tragbarer Fernsteuerungssender oder ein tragbarer Computer beziehungsweise ein mobiles Telefon mit entsprechender Eingabeschnittstelle für den Steuerungsbefehl dienen. Alternativ oder zusätzlich hierzu kann der Stellmechanismus bei Nichtempfang des Signals in Form eines an der Empfangseinheit empfangbaren Freigabesignals aktiviert werden, so dass die Bremsanordnung beispielsweise selbsttätig aktiviert wird, wenn sich das Fahrrad zu weit von dem jeweiligen Sender und der beaufsichtigenden Person entfernt.

Darüber hinaus kann der Stellmechanismus in Abhängigkeit des Signals in Form eines an der Empfangseinheit eingehenden GPS-Signals aktiviert werden. Auf diese Weise kann ein bestimmter Bereich festgelegt werden, in dem sich das Fahrrad beziehungsweise dessen Fahrer frei bewegen kann. Bei Verlassen des vorbestimmten Bereichs wird dagegen die Bremsanordnung selbsttätig aktiviert und das Fahrrad somit abgebremst. Auf diese Weise kann verhindert werden, dass sich Personen mit einem eingeschränkten Orientierungssinn, wie Kinder oder Senioren, mit dem Fahrrad verfahren. In einer weiteren vorteilhaften Ausführungsform des Fahrrades ist der Stellmechanismus in Abhängigkeit des Signals in Form eines an der Empfangseinheit eingehenden Geschwindigkeitssignals aktivierbar. Hierdurch kann das Fahrrad bei Überschreitung einer vorbestimmten kritischen Geschwindigkeit abgebremst werden, um ein Unfallrisiko der fahrradfahrenden Person zu begrenzen. Alternativ oder zusätzlich zum vollständigen Abbremsen des Fahrrades bei Überschreitung der vorbestimmten Geschwindigkeit kann die Steuerungseinrichtung auch derart eingestellt sein, dass das Fahrrad auf eine vorbestimmte Höchstgeschwindigkeit abgebremst wird, solange die kritische Geschwindigkeit überschritten wird.

Vorteilhafterweise ist der Sender durch ein tragbares Fernsteuerungssendegerät oder durch einen mobilen Computer, wie ein mobiles Telefon, ein Laptop- oder Tabletcomputer oder durch eine Smartwatch mit einem darauf gespeicherten und ausführbaren Fernsteuerungsanwendungsprogramm gebildet. Hierdurch können auch handelsübliche und der beaufsichtigenden Person bereits zur Verfügung stehende Geräte als Fernsteuerungssender zur Aussendung des Signals dienen.

Alternativ oder zusätzlich hierzu kann der Sender durch einen am Fahrrad mitgeführten GPS- und/oder Geschwindigkeitssensor gebildet sein, wodurch die Bremsanordnung auch unabhängig von einer beaufsichtigenden Person aktiviert werden kann. Dabei kann insbesondere ein Abbremsen des Fahrrades selbsttätig eingeleitet werden, sobald das Fahrrad einen vorbestimmten geografischen Bereich verlässt oder eine bestimmte Geschwindigkeit überschreitet.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Ansicht eines Fahrrades in Form eines Laufrades,
- Figur 2: eine Ansicht eines Vorder- oder Hinterrades des Fahrrades nach Figur 1,
- Figur 3: eine perspektivische Ansicht einer Radnabe des Fahrrades nach Figur 1,
- Figur 4: einer perspektivische Explosionsdarstellung einer in der Radnabe nach Figur 3 aufgenommenen Bremsanordnung,
- Figur 5: einen Längsschnitt durch die Radnabe in Ebene V-V aus Figur 3 in einer Laufstellung,
- Figur 6: einen Längsschnitt durch die Radnabe in ebene VI-VI aus Figur 3 in der Laufstellung
- Figur 7: einen Längsschnitt durch die Radnabe in Ebene VII-VII aus Figur 3 in einer Bremsstellung,
- Figur 8: einen Längsschnitt durch die Radnabe in ebene VIII-VIII aus Figur 3 in der Bremsstellung,
- Figur 9: eine perspektivische Ansicht der Radnabe in einer alternativen Ausführungsform,
- Figur 10: eine perspektivische Explosionsdarstellung der in der Radnabe nach Figur 9 aufgenommenen Bremsanordnung in einer alternativen Ausführungsform,
- Figur 11: einen Längsschnitt durch die Radnabe in Ebene XI-XI aus Figur 9 in der Laufstellung,
- Figur 12: einen Längsschnitt durch die Radnabe in Ebene XII-XII aus Figur 9 in der Bremsstellung und
- Figur 13: eine Ansicht einer alternativen Ausführungsform des Vor- oder Hinterrades des Fahrrades nach Figur 1.

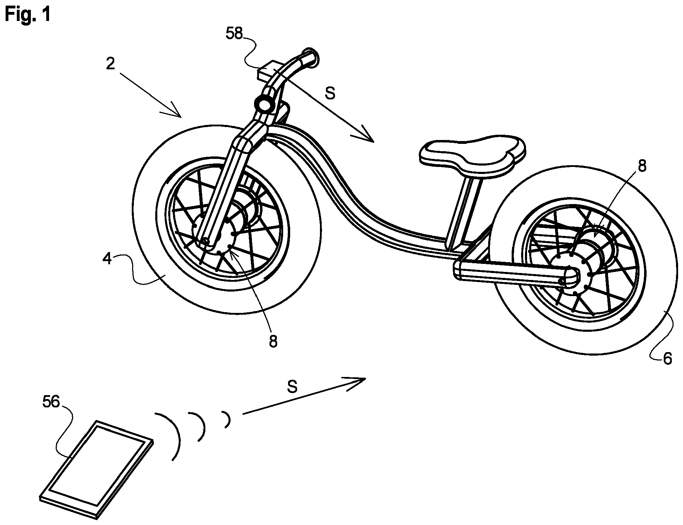

Fig. 1 zeigt ein Fahrrad 2 für eingeschränkt fahrfähige Personen in Form eines Laufrades für Kinder. Dieses weist ein Vorderrad 4 und ein Hinterrad 6 auf, die beide beispielhaft als Speichenräder ausgeführt sind und jeweils eine Radnabe 8 aufweisen.

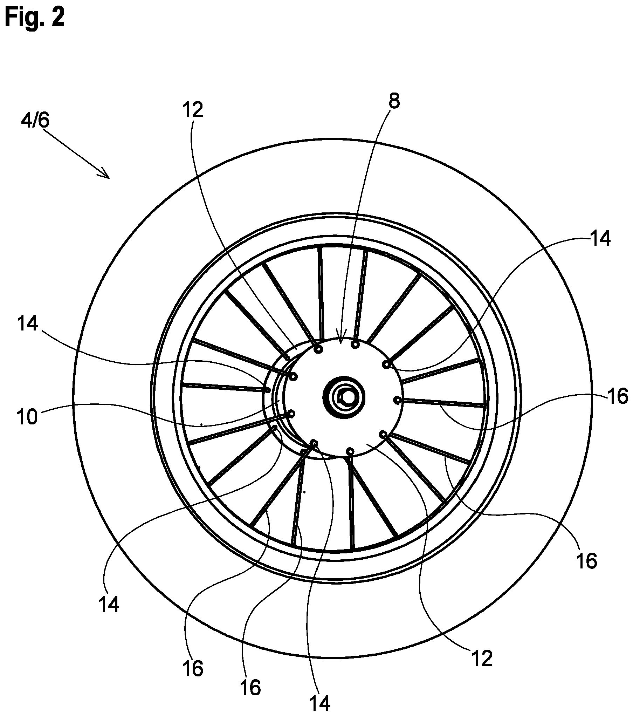

Wie in Figur 2 dargestellt, weist die Radnabe 8 des Vorder- oder Hinterrades 4, 6 ein Nabengehäuse 10 mit zwei Speichenflanschen 12 auf, in die jeweils eine umlaufende Anordnung von Speichenaufnahmen 14 eingelassen ist, die zur Befestigung der Speichen 16 dient. Das Nabengehäuse 10 kann dabei vorzugsweise aus einem faserverstärkten Material gebildet sein, um auch größere mechanische Beanspruchungen aufnehmen zu können.

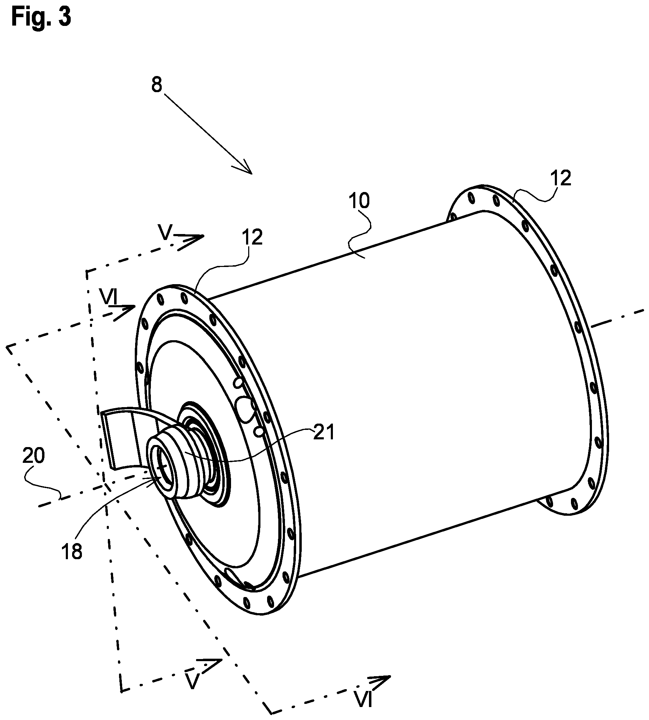

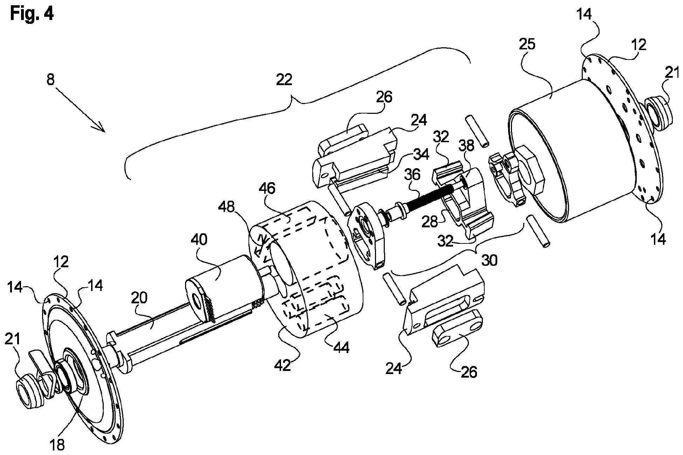

Wie ferner aus Figur 3 zu entnehmen ist, weist die Radnabe 8 ferner eine Achsaufnahme 18 zur Aufnahme und Festlegung einer Radachse 20 auf. Dabei kann an der Achsaufnahme 18 wenigstens ein hülsenförmiger Abstandshalter 21 vorgesehen sein, mittels dem die Radnabe 8 längenmäßig an unterschiedlich breite Rahmengabeln des Fahrrades 2 angepasst werden kann. Zudem dient das Gehäuse 10 der Radnabe 8 zur Aufnahme einer Bremsanordnung 22, wie sie aus Figur 4 zu entnehmen ist.

Die Bremsanordnung 22 weist dabei zwei Bremskörper 24 mit voneinander abgewandten Bremsbelägen 26 auf. Beide Bremskörper 24 sind an einem Lagerteil 28 eines Stellmechanismus 30 gehalten, mittels dem die Bremskörper 24 zwischen einer Laufstellung und einer Bremsstellung gegenüber einer Bremstrommel 25 verlagert werden können. Das Lagerteil 28 weist hierbei zwei schräg ausgerichtete Gleitelemente 32 auf, die entlang ebenfalls schräg ausgerichteter Gleitnuten 34 der Bremskörper 24 verlagerbar sind, um durch die axiale Verlagerung des Lagerteils 28 eine radiale Verlagerung der Bremskörper 24 erzielen zu können. Der Stellmechanismus 30 bildet auf diese Weise eine Art Keilgetriebe, mit dem relativ große Bremskräfte erzeugt werden können.

Zur selbsttätigen axialen Verlagerung des Lagerteils 28 weist der Stellmechanismus 30 eine Antriebsspindel 36 auf, die durch einen Elektromotor 40 antreibbar ist und die mit einer Spindelaufnahme 38 des Lagerteils 28 in kämmendem Eingriff steht. Durch Aktivierung des Elektromotors 40 wird auf diese Weise über die Antriebsspindel 36 eine Stellkraft zur axialen Verlagerung des Lagerteils 28 erzeugt, durch die wiederum die Bremskörper 24 radial verlagert werden können.

Der Elektromotor 40 ist dabei fest gegenüber der Radachse 20 gelagert, wie beispielsweise mittels einer ebenfalls im Nabengehäuse 10 aufgenommenen Halterung 42. An dieser Halterung 42 kann ferner auch ein Akkupack 44 zur Stromversorgung des Elektromotors 40 sowie eine Steuerungseinrichtung 46 vorgesehen sein, die zur Steuerung des Elektromotors 40 beziehungsweise zur Aktivierung oder Deaktivierung der Bremsanordnung 22 dient. Der Akkupack 44 kann dabei mit Anschlüssen versehen sein, die ein wiederkehrendes Aufladen ermöglichen. Alternativ oder zusätzlich hierzu können in der Bremsanordnung 22 oder separat zu dieser zudem Stromerzeugungsmittel vorgesehen sein, die ein Wiederaufladen des Akkupacks 44 durch Rekuperation ermöglichen (nicht dargestellt). Die Stromerzeugungsmittel können hierzu beispielsweise wenigstens einen Generator an einem der Bremskörper 24 aufweisen, um durch Anlage an die drehende Bremstrommel 25 Strom erzeugen zu können und dadurch eine Rekuperationsfunktion zu ermöglichen. Alternativ oder zusätzlich hierzu können die Stromerzeugungsmittel einen separaten Generator aufweisen, wie beispielsweis einen Schüttelgenerator oder einen Fahrraddynamo, um eine Bewegungsenergie des Fahrrades zum Wiederaufladen des Akkupacks nutzen zu können.

Die Steuerungseinrichtung 46 ist dabei mit einer Empfangseinheit 48 beziehungsweise einer Antenne verbunden, über die Signale S eines Senders 56; 58 empfangen werden können, in Abhängigkeit derer die Steuerung des Elektromotors 40 erfolgt. Die empfangenen Signale S können dabei, wie in Figur 1 dargestellt, beispielsweise durch Aktivierungssignale oder Freigabesignale eines tragbaren Senders 56 gebildet sein, der von einer beaufsichtigenden Person gehalten und bedient werden kann. Alternativ oder zusätzlich hierzu können die Signale S durch GPS-Signale und/oder Geschwindigkeitssignale eines am Fahrrad 2 mitgeführten Sender 58 gebildet sein.

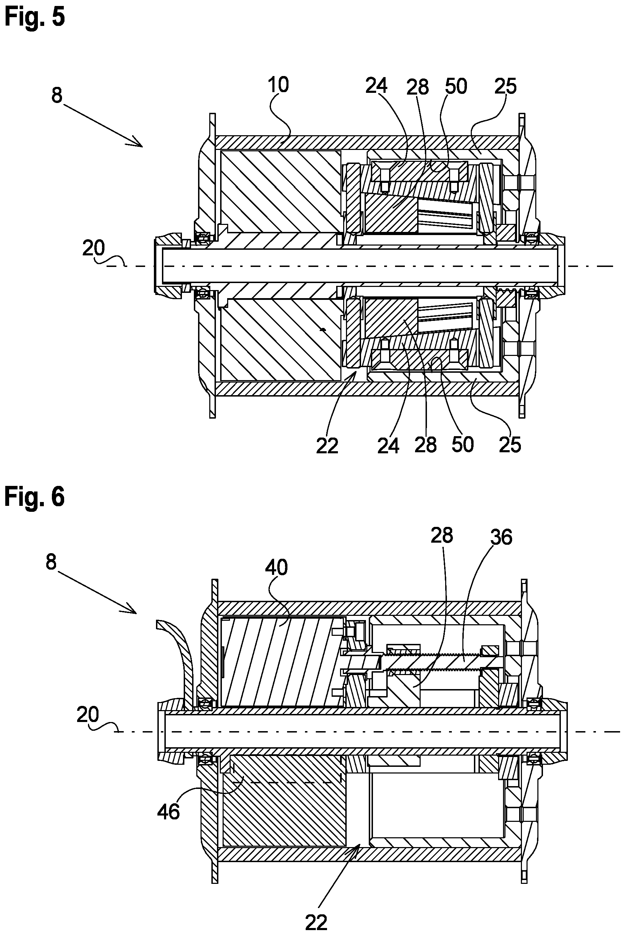

Die Figuren 5 und 6 zeigen jeweils einen Schnitt durch die Radnabe 8 gemäß Figur 3 in der Laufstellung, in der das betreffende Vorder- oder Hinterrad 4, 6 auf der Radachse 20 frei verdrehbar ist. Hierzu sind die am Lagerteil 28 gehaltenen Bremskörper 24 beabstandet zu einer Innenseite 50 der Bremstrommel 25 angeordnet, wie aus Figur 5 zu entnehmen ist. Alternativ zu der dargestellten Ausführungsform mit einer im Nabengehäuse 10 aufgenommenen separaten Bremstrommel 25 ist es möglich, dass die Bremstrommel 25 durch einen zylindrischen Teil des Nabengehäuses 10 gebildet ist.

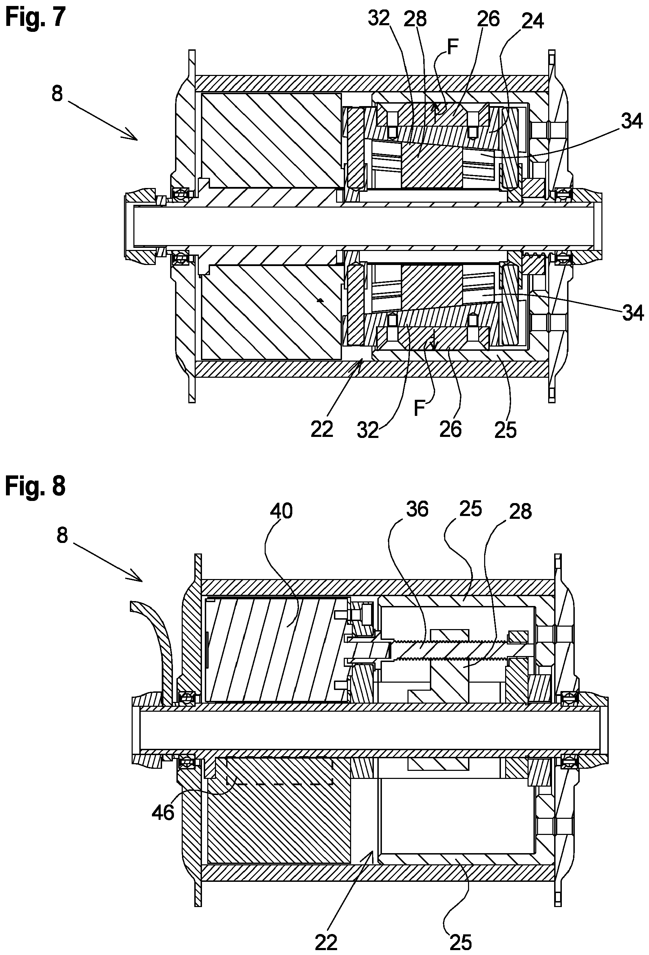

Wie insbesondere aus Figur 6 zu entnehmen ist, ist das Lagerteil 28 in der Laufstellung mittels der Antriebsspindel 36 in einer Anschlagposition gehalten, in der die Bremskörper 24 die gegenüber der Bremstrommel 25 beabstandete Position einnehmen. Durch Aktivierung des Elektromotors 40 über die Steuerungseinrichtung 46 wird das Lagerteil 28 mittels der Antriebsspindel 36 aus der Anschlagposition heraus axial verlagert und die Bremsanordnung 22 dadurch insgesamt in die Bremsstellung gemäß der Figuren 7 und 8 verbracht.

In dieser Bremsstellung sind die beiden Bremskörper 24 aufgrund des verlagerten Lagerteils 28 und dem Zusammenwirken der schrägen Gleitelemente 32 mit den Gleitnuten 34 in radialer Richtung versetzt und drücken mit den Bremsbelägen 26 gegen die Bremstrommel 25. Hierdurch wird eine Bremskraft F erzeugt, durch die das betreffende Vorder- oder Hinterrad 4, 6 abgebremst werden kann. Dabei werden die Bremskörper 24 über den Stellmechanismus 30 derart vom Elektromotor beaufschlagt, dass die Bremskraft während eines Bremsvorganges stetig zunimmt, um das Fahrrad 2 gleichmäßig und ohne ein frühzeitiges Blockieren des betreffenden Rades 4, 6 abbremsen zu können. Um hierbei auch einen gewissen Verschleiß der Bremsbeläge 26 berücksichtigen zu können, kann zudem vorgesehen sein, dass bei jeder Aktivierung der Bremsanordnung 22 nach einer vorbestimmten Ruhephase oder nach deren Aufwecken aus einem Schlaf-Modus, wie insbesondere beim Aufrichten des Fahrrades 2, eine Referenzaktivierung der Bremsanordnung 22 durchgeführt wird. Dabei wird der Elektromotor 40 gestartet, um den Weg beziehungsweise die Umdrehungen bis zur Anlage der Bremsbeläge 26 an der Bremstrommel 25 zu ermitteln. In Abhängigkeit des Ergebnisses kann dann an der Steuerungseinrichtung 46 eine Bremscharakteristik der Bremsanordnung 22 beziehungsweise ein Bremskraftverlauf im Falle einer Aktivierung eingestellt werden, um insbesondere einen Verschleiß der Bremsbeläge 26 ausgleichen zu können. Hiernach wird bei einer Aktivierung der Bremsanordnung 42 der durch den Verschleiß an den Bremsbelägen 26 entstandene Leerweg relativ schnell vom Elektromotor 40 durchlaufen und anschließend der eigentliche gewünschte Bremskraftverlauf erzeugt, um das Fahrrad 2 sicher abzubremsen.

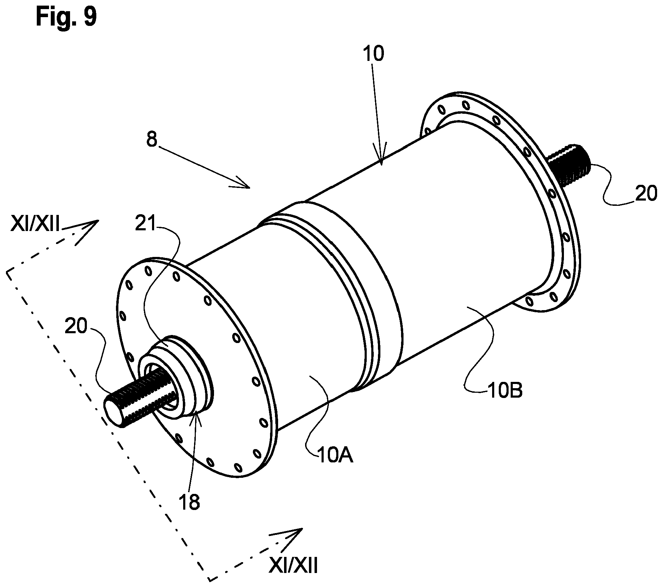

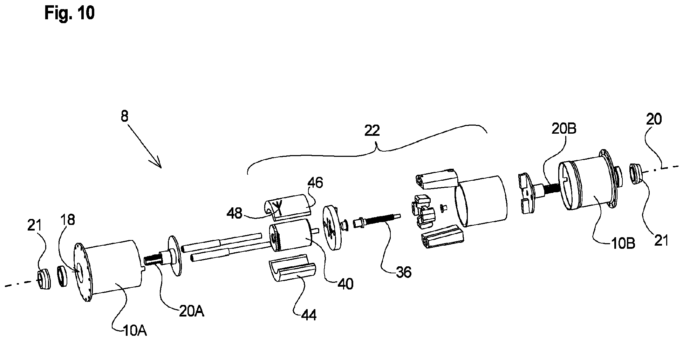

Figur 9 zeigt eine alternative Ausführungsform der Radnabe 8. Dabei ist das Gehäuse 10 durch zwei zusammengesetzte Halbschalenteile 10A, 10B gebildet, um die Montage der darin aufgenommenen alternativen Ausführungsform der Bremsanordnung 22 gemäß Figur 10 zu erleichtern. Alternativ zur dargestellten Verwendung zweier in Querrichtung geteilter Halbschalenteile 10A, 10B, könnten hierbei auch zwei in Längsrichtung geteilte Halbschalenteile verwendet werden. Auch hier sind an der Achsaufnahme 18 der Radachse 20 Abstandshalter 21 vorgesehen, um die Radnabe 8 längenmäßig an die Breite einer Rahmengabel des betreffenden Fahrrades 2 anpassen zu können.

Wie aus Figur 10 zu entnehmen ist, ist die Radachse 20 bei dieser Ausführungsform durch zwei separate Radachsenteile 20A, 20 B gebildet. Hierdurch kann der Elektromotor 40 mit der Antriebsspindel 36 koaxial zur Radachse 20 angeordnet werden. Der Akkupack 44 und die Steuerungseinrichtung 46 sind hierbei um den Elektromotor 44 herum angeordnet.

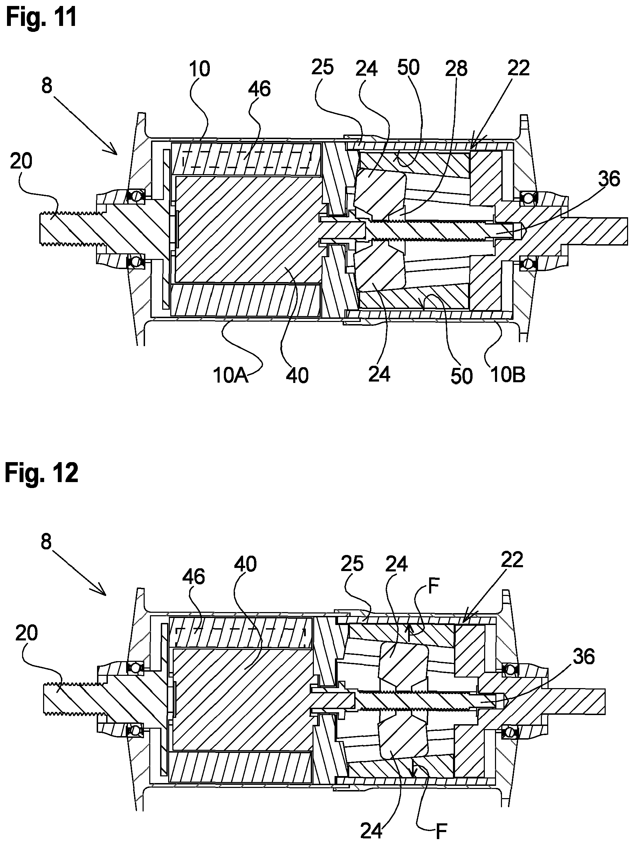

Figur 11 zeigt einen Schnitt durch die Radnabe 8 gemäß Figur 9 in der Laufstellung, in der das betreffende Vorder- oder Hinterrad 4, 6 auf der Radachse 20 frei verdrehbar ist. Hierzu sind die am Lagerteil 28 gehaltenen Bremskörper 24 beabstandet zur Innenseite 50 der Bremstrommel 25 angeordnet, wie aus Figur 11 zu entnehmen ist. Alternativ zu der dargestellten Ausführungsform mit der im Nabengehäuse 10 aufgenommenen separaten Bremstrommel 25, ist es auch hier möglich, dass die Bremstrommel 25 durch einen der beiden zylindrischen Halbschalenteile 10B gebildet ist.

In jedem Fall ist auch hier das Lagerteil 28 in der Laufstellung mittels der Antriebsspindel 36 in einer Anschlagposition gehalten, in der die Bremskörper 24 die gegenüber der Bremstrommel 25 beabstandete Position einnehmen. Durch Aktivierung des Elektromotors 40 über die Steuerungseinrichtung 46 wird das Lagerteil 28 mittels der Antriebsspindel 36 aus der Anschlagposition heraus axial verlagert und die Bremsanordnung 22 dadurch insgesamt in die Bremsstellung gemäß Figur 12 verbracht. Die koaxiale Anordnung des Elektromotors 40 und der Antriebsspindel 36 sorgt dabei für eine besonders gleichmäßige Kraftbeaufschlagung der Bremskörper 24 über das Lagerteil 28 und dadurch auch für eine gleichmäßige Aufbringung der Bremskraft F auf die Bremstrommel 25.

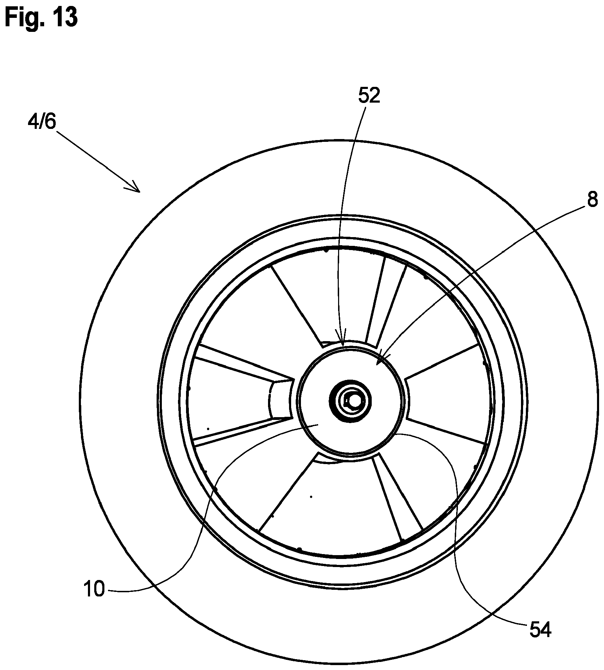

Figur 13 zeigt eine alternative Ausführungsform des Vorder- oder Hinterrades 4, 6 in Form eines Kunststofffelgenrades, das eine im Wesentlichen zylindrische zentrale Nabenaufnahme 52 bildet. In diese Nabenaufnahme 52 ist die Radnabe 8 eingesetzt, die hierzu ein entsprechend zylindrisch geformtes Nabengehäuse 10 aufweist. Zur stabilen Festlegung der Radnabe 8 können zwischen dem Nabengehäuse 10 und der Nabenaufnahme 52 dabei außenseitige Befestigungsmittel 54 vorgesehen sein, die beispielsweise eine Klebeverbindung und/oder formschlüssige Verbindungsmittel bilden.

Unabhängig von der jeweiligen Ausführungsform ist im Betrieb des Fahrrades 2 die in der Radnabe 8 aufgenommene Bremsanordnung 22 zunächst in der Laufstellung angeordnet, so dass die Räder 4, 6 des Fahrrades 2 frei abrollen können. Bei Bedarf, wie beispielsweise bei einer konkreten Gefahrensituation, bei Entfernung aus einem bestimmten Bereich oder bei Überschreitung einer vorgegebenen Geschwindigkeit kann der von einer beaufsichtigenden Person gehaltene tragbare Sender 56 gemäß Figur 1 das Signal S aussenden, um das Fahrrad 2 abzubremsen. Der tragbare Sender 56 ist hierzu beispielsweise durch ein spezielles Fernsteuerungssendegerät oder durch einen tragbaren Computer gebildet, wie insbesondere durch ein Mobiltelefon oder eine Smartwatch mit einem darauf gespeicherten und ausführbaren Anwendungsprogramm für die Steuerung der Bremsanordnung 22. Alternativ oder zusätzlich hierzu kann gemäß Figur 1 der am Fahrrad 2 mitgeführter Sender 58 vorgesehen sein, der beispielsweise durch eine Computereinrichtung mit einem GPS-Empfänger und/oder einer Geschwindigkeitssensorik gebildet ist.

In jedem Fall ist mittels des tragbaren Senders 56 und/oder mittels des mitgeführten Senders 58 bei entsprechender Steuerungseingabe durch eine beaufsichtigende Person beziehungsweise durch selbsttätiges Auslösen in Abhängigkeit vorgegebener Positions- oder Geschwindigkeitswerte das Signal S aussendbar, das von der Empfangseinheit 48 der Steuerungseinrichtung 46 empfangen werden kann. In Abhängigkeit dieses Signals S kann die Steuerungseinrichtung 46 daraufhin den Elektromotor 40 aktivieren, um die Bremsanordnung 22 von der Laufstellung in die Bremsstellung zu verbringen und dadurch das Fahrrad 2 auch ohne das Zutun der fahrenden Person abzubremsen.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Bremsanordnung (22) für ein Fahrrad (2)
mit wenigstens einem Bremskörper (24), der zwischen einer Laufstellung und einer Bremsstellung verlagerbar ist,
einem Stellmechanismus (30) zur Verlagerung des Bremskörpers (24) zwischen der Laufstellung und der Bremsstellung und
einer Steuerungseinrichtung (46) zur Aktivierung des Stellmechanismus (30) in Abhängigkeit eines über eine Empfangseinheit (48) eingehenden Signals (S),
**dadurch gekennzeichnet, dass** der wenigstens eine Bremskörper (24), der Stellmechanismus (30) und die Steuerungseinrichtung (46) innerhalb einer Radnabe (8) aufgenommen sind.

2. Bremsanordnung nach Anspruch 1, **dadurch gekennzeichnet, dass** der wenigstens eine Bremskörper (24) am Stellmechanismus (30) gehalten ist, der gegenüber einer Radachse (20) des Fahrrades (2) festlegbar ist und mittels dem der Bremskörper (24) in der Bremsstellung gegen eine Innenseite (50) einer Bremstrommel (25) pressbar ist.

3. Bremsanordnung nach Anspruch 1 oder 2, **dadurch gekennzeichnet, dass** die Radnabe (8) ein Nabengehäuse (10) aufweist, das durch zwei zusammensetzbare Halbschaltenteile (10A, 10B) gebildet ist.

4. Bremsanordnung nach Anspruch 2 oder 3, **dadurch gekennzeichnet, dass** die Bremstrommel (25) durch einen zylindrischen Teil des Nabengehäuses (10) gebildet ist.

5. Bremsanordnung nach Anspruch 3 oder 4, **dadurch gekennzeichnet, dass** das Nabengehäuse (10) zwei Speichenflansche (12) bildet, in die jeweils eine umlaufende Anordnung an Speichenaufnahmen (14) eingelassen ist.

6. Bremsanordnung nach Anspruch 3 oder 4, **dadurch gekennzeichnet, dass** das Nabengehäuse (10) außenseitige Befestigungsmittel (54) zur drehfesten Festlegung an einer zentrischen Nabenaufnahme (52) des Vor- oder Hinterrades (4; 6) aufweist.

7. Bremsanordnung nach einem der Ansprüche 3 bis 6, **dadurch gekennzeichnet, dass** das Nabengehäuse (10) wenigstens teilweise aus faserverstärktem Material hergestellt ist.

8. Bremsanordnung nach einem der Ansprüche 1 bis 7, **dadurch gekennzeichnet, dass** die Radnabe (8) eine Achsaufnahme (18) für die Radachse (20) aufweist, die längenmäßig veränderbar ist.

9. Bremsanordnung nach einem der Ansprüche 1 bis 8, **dadurch gekennzeichnet, dass** wenigstens zwei Bremskörper (24) vorgesehen sind, die mittels des Stellmechanismus (30) voneinander weg in die Bremsstellung verlagerbar sind.

10. Bremsanordnung nach Anspruch 9, **dadurch gekennzeichnet, dass** der Stellmechanismus (30) ein Keilgetriebe bildet, mittels dem die wenigstens zwei Bremskörper (24) voneinander weg in die Bremsstellung verlagerbar sind.

11. Bremsanordnung nach einem der Ansprüche 1 bis 10, **dadurch gekennzeichnet, dass** der Stellmechanismus (30) einen Elektromotor (40) aufweist, der insbesondere koaxial zur Achsaufnahme (18) ausgebildet ist.

12. Bremsanordnung nach Anspruch 11, **dadurch gekennzeichnet, dass** der Stellmechanismus (30) über einen Spindeltrieb durch den Elektromotor (40) mit einer Stellkraft beaufschlagbar ist.

13. Bremsanordnung nach Anspruch 11 oder 12, **dadurch gekennzeichnet, dass** der Elektromotor (40) über einen Akkupack (44) mit elektrischem Strom versorgbar ist, wobei der Akkupack (44) ebenfalls innerhalb der Radnabe (8) aufgenommen ist und insbesondere durch Rekuperation aufladbar ist.

14. Fahrrad-Bremse-Anordnung mit einem Fahrrad für eingeschränkt fahrfähige Personen, mit einer Bremsanordnung (22) nach einem der Ansprüche 1 bis 13 und mit einem Sender (56; 58) zur Aussendung des Signals (S), **dadurch gekennzeichnet, dass** die Bremsanordnung (22) in der Radnabe (8) eines Hinterrades (4; 6) aufgenommen und in Abhängigkeit des über die Empfangseinheit (48) eingehenden Signals (S) aktivierbar ist.

15. Fahrrad-Bremse-Anordnung nach Anspruch 14, **dadurch gekennzeichnet, dass** der Stellmechanismus (30) bei Empfang des Signals (S) in Form eines an der Empfangseinheit (48) eingehenden Aktivierungssignals und/oder bei Nichtempfang des Signals (S) in Form eines an der Empfangseinheit (48) empfangbaren Freigabesignals aktivierbar ist.

16. Fahrrad-Bremse-Anordnung nach Anspruch 14 oder 15, **dadurch gekennzeichnet, dass** der Stellmechanismus (30) in Abhängigkeit des Signals (S) in Form eines an der Empfangseinheit (48) eingehenden GPS-Signals und/oder in Form eines an der Empfangseinheit (48) eingehenden Geschwindigkeitssignals aktivierbar ist.

17. Fahrrad-Bremse-Anordnung nach einem der Ansprüche 14 bis 16, **dadurch gekennzeichnet, dass** der Sender (56) durch ein tragbares Fernsteuerungssendegerät oder durch einen mobilen Computer mit einem darauf gespeicherten und ausführbaren Fernsteuerungsanwendungsprogramm gebildet ist.

18. Fahrrad-Bremse-Anordnung nach einem der Ansprüche 14 bis 17, **dadurch gekennzeichnet, dass** der Sender (58) durch eine am Fahrrad (2) mitgeführte Computereinrichtung mit einem GPS- und/oder Geschwindigkeitssensor gebildet ist.
